# EUROPEAN PATENT APPLICATION

(11) **EP 0 945 159 A1**
(43) Date of publication of application: **29.09.1999**
(21) Application number: 99104013.0
(22) Date of filing: 12.03.1999
(51) Int. Cl.: B01D 29/01, B01D 29/03, B01D 46/42

(54) **Machine for folding the edges of self-supporting filter panels**

(30) Priority: 25.03.1998 IT TV980040
(71) Applicant: Generalfilter Italia S.p.A., 31038 Paese (Treviso) (IT)
(72) Inventor: Polin, Giovanni, 31038 Paese (Treviso) (IT)
(74) Representative: Modiano, Guido, Dr.-Ing.

(57) **Abstract**

A machine for folding the edges of self-supporting filter panels, comprising a belt (25) for feeding a panel (1) at a lateral folding shaft (11) which rotates synchronously with the belt (25) and allows to fold one edge of the panel, according to an adjustable width, through approximately 180° continuously and gradually. The machine accordingly allows to obtain an excellently finished panel (1) which can be easily and rapidly used by a maintenance technician for replacement in the system.

## Description

The present invention relates to a machine for folding the edges of self-supporting filter panels.

It is currently known to produce, in the field of filtration, a filter cell which is substantially formed by a filtering partition, by one or more supporting nets, and by a metal or cardboard frame whose main function is to give rigidity to the structure, with the aim of allowing to insert the cell in the seat, which is normally constituted by C-shaped guides.

Although these conventional panels are highly functional, drawbacks have been observed as regards the intervention of maintenance personnel: any replacement of the filtering partition in fact requires the maintenance technician to provide reinforcements along the perimeter of the partition in order to give greater rigidity to the panel and therefore allow easier replacement thereof.

Reinforcement along the perimeter is currently performed by hand, by manually folding the perimeter of the panel for approximately 1 or 2 centimeters; this operation requires a relatively long time, is awkward and usually allows to achieve an aesthetically very poor result owing to the fold being highly irregular, possibly forcing the maintenance technician to perform the operation anew.

The aim of the present invention is to solve the above-described problem, eliminating the drawbacks of the cited prior art, by providing a machine which, starting from a panel formed by a net and a filtering partition, allows to obtain for said panel a given rigidity, suitable to allow its insertion and therefore its optional subsequent replacement at adapted filter cells provided for its insertion.

Within the scope of this aim, an object of the present invention is to provide a machine which allows the technician in charge with the maintenance to provide the strengthening of the panel quickly and easily.

Another object of the present invention is to provide a machine which allows the said technician to obtain a panel which is aesthetically perfect and therefore has perfectly straight perimetric edges.

Another object of the present invention is to provide a machine which is reliable and safe in use and has low manufacturing costs.

This aim, these objects and others which will become apparent hereinafter are achieved by a machine for folding the edges of self-supporting filter panels, characterized in that it comprises a belt for feeding a panel at a lateral folding shaft which rotates synchronously with said belt and is suitable to fold one edge of said panel, according to an adjustable width, through approximately 180° continuously and gradually.

Further characteristics and advantages of the present invention will become apparent from the following detailed description of a particular but not exclusive embodiment thereof, illustrated only by way of non-limitative example in the accompanying drawings, wherein:

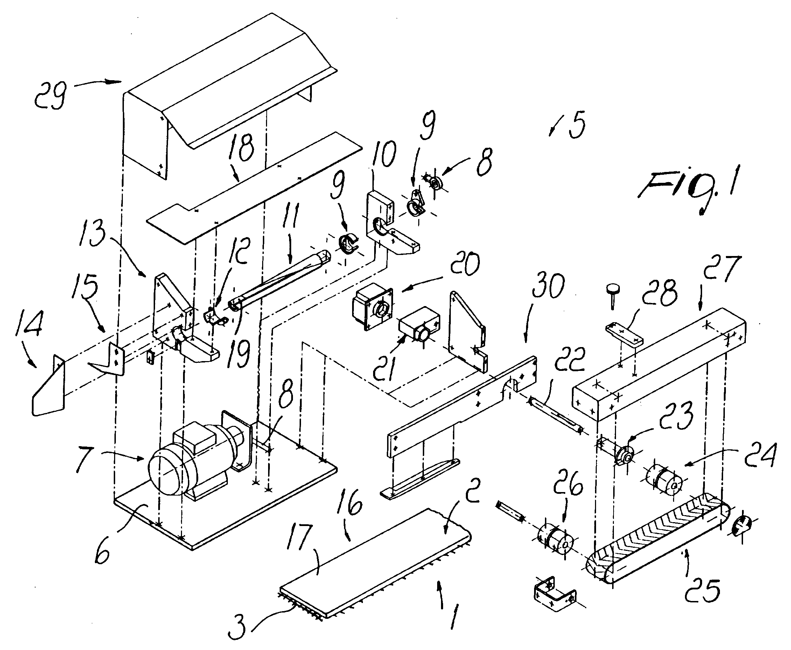

Figure 1 is an exploded view of the components of the machine according to the invention;

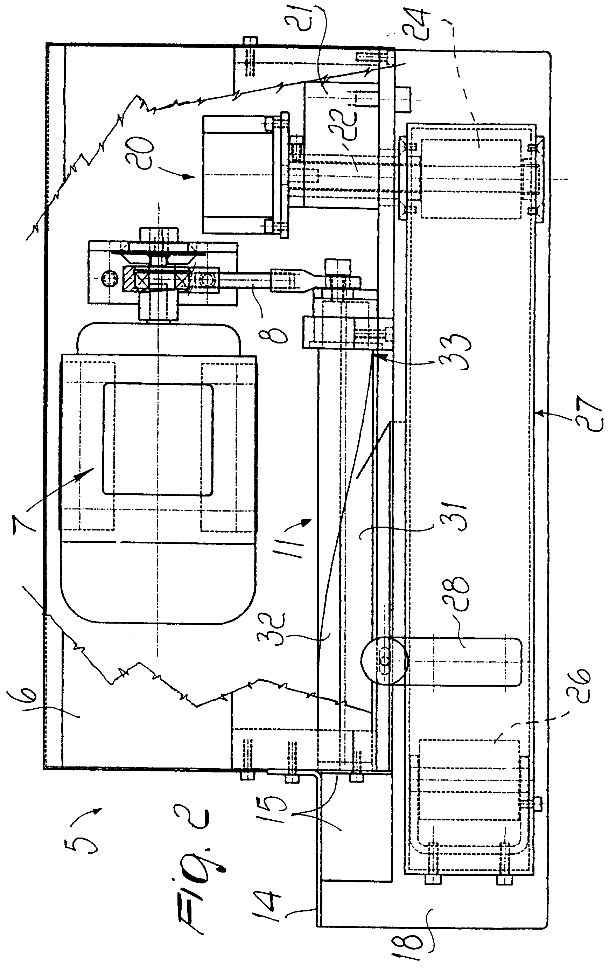

Figure 2 is a schematic top view of the machine of Figure 1;
Figure 3 is a perspective view of the machine in the assembled condition;
Figure 4 is a perspective view of the folding shaft of the machine illustrated in Figures 1-3;
Figure 5 is a perspective sectional view of the folding shaft, taken along the plane V-V of Figure 4, and of the corresponding configuration assumed by the panel;
Figure 6 is a front view of the panel in the configuration that it assumes according to Figure 5;
Figure 7 is a perspective sectional view of the folding shaft, taken at the plane V-V of Figure 4, and of the corresponding configuration assumed by the panel;
Figure 8 is a front view of the panel in the configuration assumed according to Figure 7;
Figure 9 is a perspective sectional view of the folding shaft, taken at the plane V-V of Figure 4, and of the corresponding configuration assumed by the panel;
Figure 10 is a front view of the panel in the configuration assumed according to Figure 9;
Figure 11 is a perspective sectional view of the folding shaft, taken at the plane V-V of Figure 4, and of the corresponding configuration assumed by the panel;
Figure 12 is a front view of the panel in the configuration assumed according to Figure 11.

With reference to the above figures, the reference numeral 1 designates a self-supporting filter panel which is preferably constituted by a filtering partition 2 which is coupled to a net 3.

The reference numeral 5 designates the machine for folding the edges of the self-supporting filter panels 1; said machine is constituted by a footing 6 for supporting a motor 7, to whose shaft a connecting rod 8 is connected. The connecting rod is connected at its other end, by means of first joints 9 associated with a first shoulder 10 which protrudes from the footing 6, at the end of a folding shaft 11.

The folding shaft 11 is supported, at its other end, by a second joint 12 which is in turn associated with a second shoulder 13 which protrudes from the footing 6 parallel to the first shoulder 10.

A first redirection flap 14 and a second redirection flap 15 are further associated with the second shoulder 13 and are designed respectively to support the perimetric edge 16 to be folded of the panel 1 and the upper lateral surface 17 of the panel.

The panel 1 is rested at a suitable flat base 18 which is arranged adjacent to the first redirection flap 14, lies below the second redirection flap 15 and is such as to arrange the panel 1 at the flat end 19 of the folding shaft 11, which is supported at the second shoulder 13.

A gearmotor 20 is further associated with the footing 6 and, by means of a suitable coupling 21, actuates the rotation of a shaft 22 which is arranged transversely to the panel 1 and is associated at one end, by interposing a suitable bush 23, with a first traction roller 24 for a belt 25 which is arranged above the flat base 18 and is freely rotatably associated, at its other end, with a second roller 26.

The first and second rollers are rotatably supported by a box-like structure 27 which is arranged above the flat base 18 to the side of the second redirection flap 15 by means of a suitable bracket 28 for connection to a covering housing 29 which can be associated with the footing 6.

The belt 25 therefore allows to actuate the advancement of the panel 1 automatically, since it is possible to impart a uniform translatory motion, at a controlled speed, synchronously with the movement that can be imparted to the folding shaft 11.

The folding shaft 11 is therefore arranged parallel to the perimetric edge 16 to be folded of the panel 1; said edge can be folded over by a chosen extent by virtue of the presence of an adapted guide 30 which is arranged approximately parallel to the belt 25.

The motor 7 can be of the type allowing both single-phase AC power supply and low-voltage DC supply, in order to allow the maintenance technician to use the electrical system that is present at the installation site or, in the case of new systems, simply to connect the motor to the battery of any vehicle.

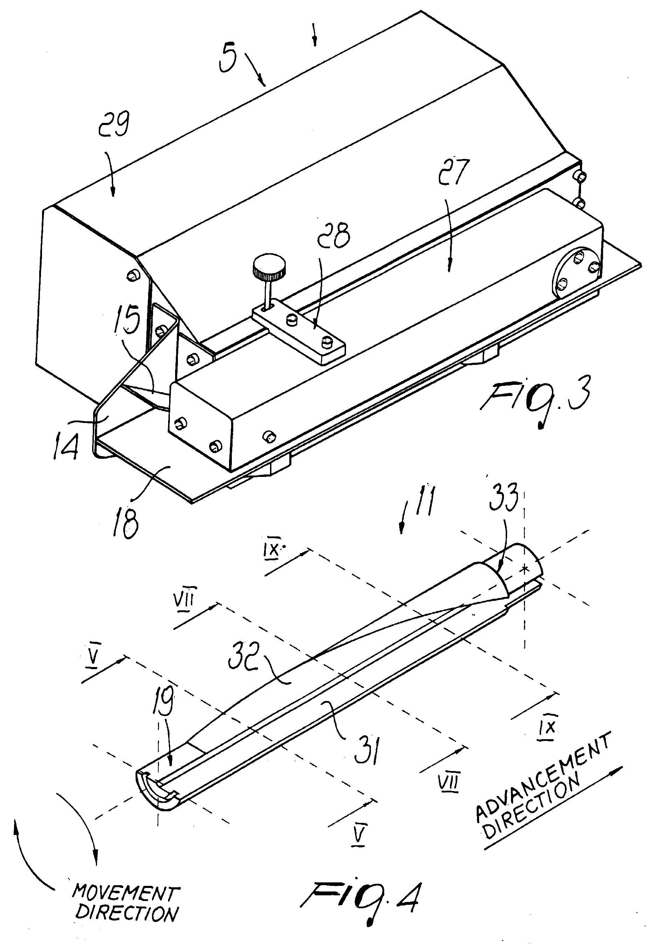

At its flat end 19, the folding shaft 11 forms, along half of its diameter, a flat surface 31 (see Figure 4) which is directed toward the belt 25, while at the other half of the diameter a surface 32 is contiguous to the flat end 19, has a clockwise helical shape which turns through approximately 180° and is arranged at the end 33 that faces the flat surface 31.

This configuration of the folding shaft 11 allows, when the panel 1 is inserted, to produce a continuous and gradual folding of the perimetric edge 16 to be folded of the panel 1, obtaining, for said edge, successive further folding actions until it is folded completely over by approximately 180°, so as to form a perfectly overlapping and straight folded edge 34.

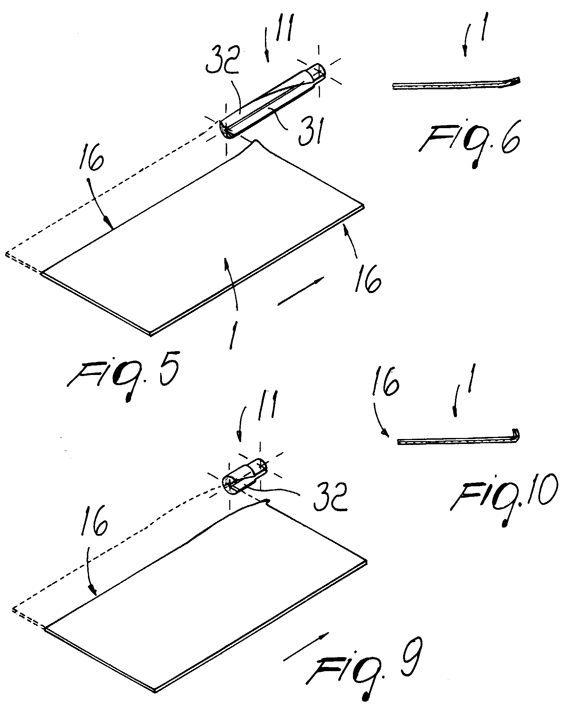

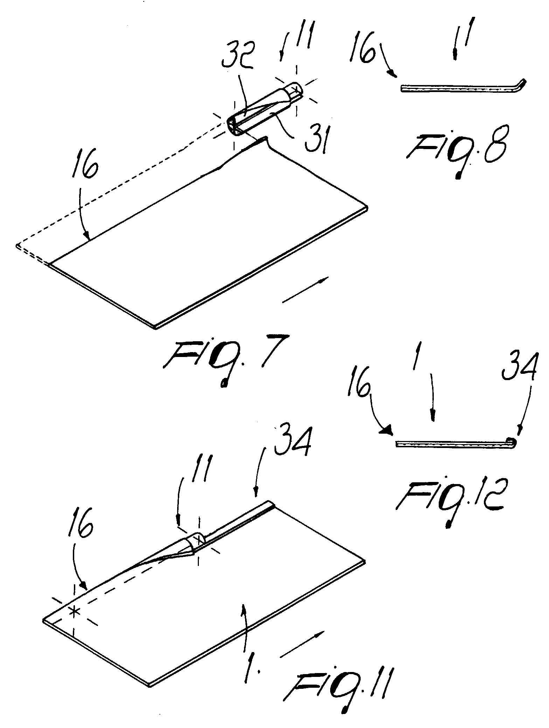

The sequence is shown in Figures 5 to 12.

It has thus been observed that the invention has achieved the intended aim and objects, a machine having been provided which allows to quickly and easily fold over the edge of a self-supporting filter panel, so as to allow to strengthen it, obtaining a perfectly folded edge and thus also increasing the aesthetic characteristics of the treated panel.

At this point, the maintenance technician can easily insert the panel in the cell, thus replacing the preceding panel; as an alternative, he can replace the frame of the cell and accommodate the self-supporting filter panel directly in the guide provided for this purpose.

The invention is of course susceptible of numerous modifications and variations, all of which are within the scope of the same inventive concept.

The materials and the dimensions that constitute the individual components of the machine according to the present invention may also of course be the most appropriate according to specific requirements.

The disclosures in Italian Patent Application No. TV98A000040 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for folding the edges of self-supporting filter panels, characterized in that it comprises a belt for feeding a panel at a lateral folding shaft which rotates synchronously with said belt and is suitable to fold one edge of said panel, according to an adjustable width, through approximately 180° continuously and gradually.

2. The machine according to claim 1, characterized in that it comprises a supporting footing for a motor to whose shaft a connecting rod is connected, said connecting rod being connected at its other end, by means of first joints associated with a first shoulder which protrudes from said footing, at the end of said folding shaft, which is supported, at its other end, by a second joint which is in turn associated with a second shoulder which protrudes from said footing, parallel to said first shoulder, a first redirection flap and a second redirection flap being further associated with said second shoulder respectively to support the edge to be folded of said panel and the upper lateral surface of said panel.

3. The machine according to claim 2, characterized in that said panel rests at a flat base which is arranged adjacent to said first redirection flap, lies below said second redirection flap and is such as to arrange said panel at a flat end of said folding shaft, which is supported at said second shoulder.

4. The machine according to claim 3, characterized in that a gearmotor is associated with said footing and, by means of a coupling, actuates the rotation of a shaft which is arranged transversely to said panel and is associated at one end, by interposing a suitable bush, with a first driving roller for a belt arranged above said flat base and is freely rotatably associated with a second roller at its other end.

5. The machine according to claim 4, characterized in that said first and second rollers are rotatably supported by a box-like structure which is arranged above said flat base to the side of said second redirection flap by means of a bracket for connection to a covering housing which is associable with said footing.

6. The machine according to claim 4, characterized in that said belt actuates the advancement of said panel automatically, allowing to impart a uniform translatory motion at a controlled speed, optionally in step with the movement that can be imparted to said folding shaft.

7. The machine according to claim 4, characterized in that said folding shaft is arranged parallel to the edge to be folded of said panel, said edge being foldable by a preset extent by virtue of the presence of a guide which is approximately parallel to said belt.

8. The machine according to claim 1, characterized in that said folding shaft has a flat end and at said flat end forms for half of its diameter a flat surface which is directed toward said belt, at the other half of its diameter a surface being present which is contiguous to said flat end and has a clockwise helical shape, rotating through approximately 180° and being arranged at its end so as to face said flat surface.

9. The machine according to claim 2, characterized in that said motor has both a single-phase AC power supply and a low-voltage DC power supply.
